# EUROPEAN PATENT SPECIFICATION

(11) **EP 0 859 795 B1**
(45) Date of publication and mention of the grant of the patent: **02.04.2003**
(21) Application number: 96939628.2
(22) Date of filing: 08.11.1996
(51) Int. Cl.: C08B 37/02

(54) **PROCESS FOR MAKING CRYSTALLINE IRON DEXTRAN**
VERFAHREN ZUR HERSTELLUNG EINES KRISTALLINEN EISENDEXTRANS
PROCEDE DE PREPARATION DE FER-DEXTRAN CRISTALLIN

(30) Priority: 09.11.1995 US 6518 P
(43) Date of publication of application: 26.08.1998
(73) Proprietor: Abbott Laboratories, Abbott Park, Illinois 60064-3500 (US)
(72) Inventor: MONTE, William, T., Thirdlake, IL 60030 (US); SCAGGS, Laurie, Lake Villa, IL 60046 (US)
(74) Representative: Modiano, Guido, Dr.-Ing.
(86) International application number: US9618018
(87) International publication number: WO97017377

(56) References cited:
- GB-A- 1 200 902
- US-A- 2 856 398
- US-A- 2 862 920

## Description

### Technical Field

The present invention relates to a process for making iron preparations useful in the treatment of iron deficiencies. More particularly, the invention relates to a process for the preparation of crystalline iron(III)-dextran complex.

### Background of the Invention

Iron dextran has been known for about 35 years. It has been utilized primarily as an injectable agent for countering iron deficiencies in animals and human patients, having several advantages over other iron preparations including low toxicity, low incidence of adverse reactions, and satisfactory rate of iron adsorption.

Iron dextran is typically prepared by forming a complex of dextran with iron(III). The dextrans used are generally either (i) partially depolymerized dextrans having a molecular weight in the range of 1,000 to 10,000 or (ii) modified forms of dextran such as hydrogenated dextrans or oxidized dextrans. The iron(III) is prepared by neutralization of an aqueous solution of an iron(III) salt with an alkali. In order to prepare an aqueous iron dextran solution in a form suitable for injection, it is necessary to remove the soluble salts formed in the reaction between the water-soluble ferric salt and the dextran. This can be accomplished by known procedures such as dialysis or reverse osmosis, or by precipitation of the iron dextran complex from the aqueous solution, followed by drying and reconstitution with water.

Isolation of the iron-dextran complex from the aqueous solution by precipitation with a water-miscible solvent is known in the art. United States Patent No. 4,599,405 describes centrifuging and filtering the aqueous iron-dextran solution, followed by precipitation of the complex with ethanol. The complex is then washed with ethanol, separated, and dried to give the iron-dextran complex as a solid which is then reconstituted with water to form an injectable solution.

United States Patent Number 3,093,545 describes isolation of a treacle-like solid iron dextran complex by addition of methanol to the aqueous iron dextran solution, allowing the solid to settle, and decanting the supernatant liquid. The residual solid is then washed with aqueous ethanol, the liquid is decanted, and the process repeated. The residual liquid is removed by vacuum filtration, and the remaining solid complex is dried.

United States Patent Number 3,574,184 describes isolation of a treacle-like solid iron dextran complex by addition of ethanol to the aqueous solution and one or more centrifugation steps.

United States Patent Number 2,885,393 describes a process for making a gelatinous form of an iron dextran complex wherein the complex is purified by precipitation from aqueous solution by addition of isopropanol, followed by decanting the supernatant liquid, redissolving the solid in water, and repeating the process. After further processing, the iron dextran complex is obtained as an aqueous solution.

United States Re. 24,642 describes purification of the iron-dextran complex by filtering the aqueous solution, precipitating the complex by mixing with ethanol, filtering the gelatinous solid, and redissolving the complex in water and repeating the precipitation with ethanol. The iron-dextran complex is then dissolved in water to form the injectable solution.

GB-A-1200902 discloses the precipitation of an iron-dextran complex from aqueous solution by the addition of a water-miscible material, such as a lower alcohol, which is a non-solvent for the dextran.

United States Patent Number 2,862,920 discloses a process for making a ferrous carboxymethyl dextran in which first a gelatinous precipitate is formed and such gelatinous precipitate is filtered and then added to methanol.

United States Patent Number 2,856,398 teaches the formation of a powdered or granular carboxymethyl dextran-iron complex by repeated precipitations using a water-miscible non-solvent for the complex either by adding the aqueous solution of the complex to the non-solvent, such as isopropanol, or by adding the non-solvent to the aqueous solution. In Example III, a carboxymethyl dextran-iron complex is precipitated by the addition of the solution to isopropanol and such precipitation step is preceded by twice carrying out steps in which isopropanol is added to the solution to precipitate the complex and then the complex is redissolved. In Examples IV and V of such document, the aqueous solution of the complex is added to isopropanol to precipitate the complex. In Example IV, the precipitated complex is redissolved and at least five more precipitations are carried out in the same manner to obtain the final product. In Example V, the first precipitation results in a tacky and spongy precipitate and the second precipitation results in a granular precipitate. In Examples I and II, isopropanol is added to the aqueous solution of the complex.

All of the prior art methods for isolating the solid iron-dextran complex require addition of the precipitating solvent to the aqueous iron dextran solution and result in gelatinous or treacle-like solids which are difficult to filter. Alternate methods of solvent removal, such as centrifugation or decantation are therefore required. Substantial further processing of the initial solid is also required to obtain complex of sufficient purity for use as injectable solutions. Consequently, there remains a need for a method of precipitation which produces pure iron dextran complex which can be easily isolated by filtration and dried. The dry powder can then be stored and reconstituted as needed to form the aqueous solution, thereby obviating storage difficulties which result from the prior art methods in which the complex is prepared and/or stored as a 5-to-10% aqueous solution.

### Summary of the Invention

It has now been found that a process in which an iron-dextran complex is added to a solvent, instead of the solvent being added to the iron-dextran complex, unexpectedly results in the formation of an easily-filtered crystalline solid which can be dried to a powder and easily stored for later reconstitution with water. This ease of filtration, and the elimination of the need for reverse osmosis, decanting, or other means of isolation of the solid from the residual aqueous solution, offer a means of considerable cost savings.

Accordingly, the method of the present invention of making crystalline iron-dextran complex comprises the steps of:
(a) combining an aqueous solution of dextran in which the dextran has an average molecular weight of 3,000 to 6,000 with an aqueous solution of an iron(III) salt;
(b) combining the mixture with alkali;
(c) heating and stirring the mixture until the formation of an iron-dextran complex is substantially complete;
(d) optionally acidifying the mixture;
(e) precipitating the iron-dextran complex by adding the mixture to a water miscible organic solvent; and
(f) isolating the crystalline iron-dextran complex.

In another aspect of the present invention is disclosed a process for the crystallization of an iron-dextran complex in readily-filterable form, comprising adding slowly, with stirring, an aqueous iron-dextran solution to a vessel already containing a water miscible organic solvent.

### Detailed Description of the Invention

Dextran is a polysaccharide polymer of formula (C₆H₁₀O₅)ₙ composed exclusively of a-D-gluconpyranosyl units linked predominately α-1-6 and obtained by the action of bacteria grown on a sucrose substrate by methods well-known in the art. Native dextrans usually have high molecular weight. Lower molecular weight dextrans are prepared by partial depolymerization of the native dextrans by methods known in the art, such as treatment with mineral acid.

A dextran obtained by partial depolymerization of such a native dextran may be further modified, as for example by partial reduction using sodium borohydride or catalytic hydrogenation, or by oxidation. The term "dextran" as used herein is intended to include dextran, reduced dextran, and oxidized dextran. Treatment of unmodified dextran with mild oxidizing agents such as sodium or potassium periodate introduces carboxyl groups on the terminal glucose unit. Optionally, the terminal glucose unit may be oxidized to carboxylic groups using, for example, bromine, sodium hypobromite, sodium bromite, sodium hypochlorite or sodium chlorite. In one embodiment of the invention, dextran is dissolved in water and oxidized by treatment with between about 0.4 and about 0.6 parts per weight (ppw) 5% aqueous sodium hypochlorite, followed by between about 0.10 and about 0.15 ppw of aqueous sodium hydroxide. The oxidation is best carried out at ambient temperature (about 15 to about 35 °C). A representative dextran contemplated for use in the present invention is a partially depolymerized dextran having a molecular weight of between about 1,000 and about 10,000, preferably between about 3,000 and about 6,000.

In accordance with the foregoing, between about 1 and about 10 ppw of such a dextran are dissolved in water (preferred dextrans being unoxidized or oxidized dextrans, with oxidized dextrans being most preferred). A particularly preferred embodiment of the process of the present invention utilizes between about 1.0 and about 1.5 ppw of oxidized dextran having a molecular weight of 5,000 to 6,000. The aqueous dextran solution is then added with stirring to an aqueous solution of about 1 ppw of iron(III), where the term "iron(III)" means trivalent hydrous ferric oxide. The iron(III) solution is prepared by neutralizing a ferric salt with alkali. Suitable ferric salts include any water-soluble salts which generate hydrous ferric oxide when treated with alkalis. Representative salts include ferric chloride, ferric nitrate, ferric sulfate, ferric perchlorate, ferric acetate, ferric trichloroacetate, ferric citrate and the like, as well as double salts such as ferric ammonium sulfate or ferric ammonium citrate and the like. Of the above salts, ferric chloride is particularly preferred. Representative alkalis include the hyroxides and carbonates of sodium, lithium and potassium. The ferric salt may be neutralized by treatment with excess alkali, or may be formed in a two step process involving partial neutralization with alkali followed by addition of the dextran solution and additional alkali to achieve complete neutralization and complex formation. The iron(III) solution is preferably prepared by adding between about 0.14 and about 0.24 ppw of aqueous sodium carbonate to an aqueous solution containing about 1 ppw of hydrated ferric chloride.

After combining the aqueous iron(III) and dextran solutions, the mixture is made basic by addition of between about 0.15 and about 0.25 ppw alkali, preferably sodium hydroxide. The mixture is then heated, preferably at between about 80 and about 100 °C, and stirred until complex formation is complete. When unoxidized dextran is used, gradual heating may be required to prevent formation of a heterogeneous mixture. The solution may then be acidified using solid, gaseous or liquid acid, preferably aqueous hydrochloric acid, to obtain a pH of between about 4 and about 5. The solution may then be heated, preferably at between about 118 and about 135 °C, at a pressure of between about 10 and about 20 psi (68 and 138 KPa). After cooling to ambient temperature, crystalline iron-dextran complex is obtained by adding the reaction solution to a water-miscible organic solvent in a solution-to-solvent ratio of preferably not more
than 1:1 by volume, followed by filtration. Representative solvents include methanol, ethanol, isopropanol, acetone and the like, with methanol being the most preferred solvent and (when methanol is used) the preferred ratio of aqueous iron-dextran solution to solvent being 1:8. To reduce solvent volume, the aqueous iron-dextran solution may be concentrated prior to addition to the solvent. The initially obtained crystalline iron-dextran may be washed with additional solvent prior to drying and storage.

The process of the present invention will be better understood in connection with the following Examples, which are intended solely as an illustration thereof.

### Example 1

### Preparation of Crystalline Iron-Dextran Complex using Oxidized Dextran

To a solution of molecular weight 5000 Dextran (60.7 g) in water (108 mL) was added bleach (32 mL) and 5% aqueous sodium hydroxide (7.5 mL). The solution was stirred for one hour and then was refrigerated for 17 hours. To a stirred solution of ferric chloride (60 g) in water (300 mL) was added, dropwise over 60 minutes, a solution of sodium carbonate (11.8 g) in water (100 mL), followed by the bleach-dextran solution. To the resulting solution was added a solution of sodium hydroxide (22.6 g) in water (100 mL) over a 60 minute period. The mixture was heated at 90-100 °C for 90 minutes and then was cooled to ambient temperature and acidified with to pH 4 with HCl to give 907 g of iron-dextran solution. A 447 g aliquot was removed and concentrated to a volume of 160 mL and then was added with stirring to 1038 g of methanol. The resulting crystalline solid was collected by filtration and washed with methanol. The solid was slurried in methanol (173 g), filtered, and dried to afford 15.63 g of iron-dextran powder. The material passed gel permeation chromatographic analysis.

### Example 2

### Preparation of Crystalline Iron-Dextran Complex using Unoxidized Dextran

To a solution in water (70 mL) of ferric chloride (24.0 g) was added a solution of sodium carbonate (4.7 g) in water (40 mL) over an 80-minute period. To the mixture was added a solution of dextran (27.3 g) in water (70 mL), followed by addition, over 40 minutes, of a solution of sodium hydroxide (9.0 g) in water (110 mL). The mixture was then added to methanol (350 mL). The resulting solid was filtered, dissolved in water (150 mL) and heated at 85 °C for 60 minutes. The mixture was cooled and added to methanol (100 mL). The resulting solid was filtered and dried to afford 19.4 g of iron dextran powder. The material passed gel permeation chromatographic analysis.

### Example 3

### Preparation of Crystalline Iron-Dextran Complex with In Situ Oxidation of Dextran

To a solution of molecular weight 5000 dextran (27.3 g) in water (70 mL) was added 2.25 N aqueous sodium hydroxide (5 mL); the resulting mixture was heated at 75-80 °C for 30 minutes. The solution was cooled and added to a ferric solution prepared by treating a solution of ferric chloride (24.0 g) in water (70 mL) with 1.1 N aqueous sodium carbonate (40 mL). The resulting solution was heated to 80-90 °C, cooled, and added to methanol (100 mL) with stirring. The resulting crystalline solid was filtered and dried to give iron-dextran powder. The material passed gel permeation chromatographic analysis.

### Example 4

### Industrial Preparation of Crystalline Iron-Dextran

To a 30-gallon reactor containing a 25 °C solution under N₂ of ferric chloride hexahydrate (5.0 kg) in degassed water (25 kg) was added a solution of sodium carbonate (1.0 kg) in water (8.3 kg). The temperature was maintained at 20-26 °C while stirring at 30-50 rpm during the addition. In a 50-gallon reactor, dextran (5.2 kg) was dissolved in water (9.1 kg). To the dextran solution was added 5% aqueous sodium hypochlorite (2.9 kg) and after thorough mixing 10% aqueous sodium hydroxide solution (0.7 kg) was added. The solution was stirred until it did not react with KI starch paper. The oxidized dextran solution was then added to the ferric solution over 5 minutes while maintaining the temperature of the ferric solution at 23-25 °C and stirring at 75-100 rpm. A solution of sodium hydroxide (2.0 kg) in water (8.3 kg) was added over a period of about one hour. The reaction mixture was then stirred for 90 minutes at 21-26 °C and then was warmed to 85-100 °C for 90 minutes. The reaction mixture was then cooled to 30-40 °C and adjusted to pH 4.3-5.0 with HCl.

The reaction mixture was then filtered and the filtrate was heated at 121-130 °C in a sealed vessel for 80-90 minutes. The solution was concentrated to a volume of about 15 L and cooled to ambient temperature. The iron-dextran solution was then slowly added to 121 kg of methanol over about 60 minutes with vigorous stirring. A precipitate formed instantly. The solid was filtered and rinsed with methanol (120 kg) and then was suspended in 64 kg of methanol. The suspension was stirred for 30 minutes. The solid was filtered and dried *in vacuo* at 85 °C to give 4.03 kg of iron-dextran powder.

## Claims

1. A process for the preparation of crystalline iron-dextran complex, comprising the steps of:
(a) combining an aqueous solution of dextran in which the dextran has an average molecular weight of 3,000 to 6,000 with an aqueous solution of an iron(III) salt;
(b) combining the mixture with alkali;
(c) heating and stirring the mixture until the formation of an iron-dextran complex is substantially complete;
(d) precipitating the iron-dextran complex by adding the mixture to a water-miscible organic solvent; and
(e) isolating the crystalline iron-dextran complex.

2. The process of Claim 1 wherein the water-miscible solvent is methanol.

3. The process of Claim 1 wherein the dextran is selected from the group consisting of dextran, oxidized dextran, and hydrogenated dextran.

4. The process of Claim 3 wherein the dextran is oxidized dextran.

5. The process of Claim 4 wherein the oxidized dextran is prepared by combining sodium hypochlorite and alkali with an aqueous solution of dextran.

6. A process for the crystallization of an iron-dextran complex in readily-filterable form, comprising adding slowly, with stirring, an aqueous iron-dextran solution to a vessel containing a water miscible organic solvent.

7. The process of Claim 6 wherein the aqueous iron dextran solution is added to the water-miscible organic solvent in a ratio of not more than 1:1 by volume.

8. The process of Claim 7 wherein the water-miscible solvent is methanol.

9. The process of Claim 8 wherein the aqueous iron dextran solution is added to the methanol in a ratio of 1:8 by volume.

## Revendications

1. Procédé pour la préparation d'un complexe cristallin fer-dextrane, comprenant les étapes consistant à :
(a) combiner une solution aqueuse de dextrane, dans laquelle le dextrane a une masse moléculaire moyenne de 3 000 à 6 000, avec une solution aqueuse d'un sel de fer (III) ;
(b) combiner le mélange avec une base ;
(c) chauffer et agiter le mélange jusqu'à ce que la formation de complexe fer-dextrane soit sensiblement complète ;
(d) précipiter le complexe fer-dextrane par addition au mélange d'un solvant organique miscible à l'eau et
(e) isoler le complexe cristallin fer-dextrane.

2. Procédé selon la revendication 1, dans lequel le solvant miscible à l'eau est le méthanol.

3. Procédé selon la revendication 1, dans lequel le dextrane est choisi dans le groupe constitué par le dextrane, le dextrane oxydé et le dextrane hydrogéné.

4. Procédé selon la revendication 3, dans lequel le dextrane est un dextrane oxydé.

5. Procédé selon la revendication 4, dans lequel le dextrane oxydé est préparé en combinant de l'hypochlorite de sodium et une base avec une solution aqueuse de dextrane.

6. Procédé pour la cristallisation d'un complexe fer-dextrane sous une forme pouvant être filtrée facilement comprenant l'addition, lentement, sous agitation, d'une solution aqueuse fer-dextrane dans un récipient contenant un solvant organique miscible à l'eau.

7. Procédé selon la revendication 6, dans lequel la solution aqueuse fer-dextrane est ajoutée au solvant organique miscible à l'eau sous un rapport ne dépassant pas 1:1 en volume.

8. Procédé selon la revendication 7, dans lequel le solvant miscible à l'eau est le méthanol.

9. Procédé selon la revendication 8, dans lequel la solution aqueuse fer-dextrane est ajoutée au méthanol sous un rapport de 1:8 en volume.

## Patentansprüche

1. Ein Verfahren zur Herstellung eines kristallinen Eisen-Dextran-Komplexes, das folgende Schritte umfaßt:
(a) Vereinigen einer wässerigen Dextran-Lösung, worin das Dextran ein durchschnittliches Molekulargewicht von 3000 bis 6000 besitzt, mit einer wässerigen Eisen(III)-Salzlösung;
(b) Vereinigen der Mischung mit Alkali;
(c) Erhitzen und Rühren der Mischung, bis die Bildung eines Eisen-Dextran-Komplexes im wesentlichen vollständig ist;
(d) Ausfällen des Eisen-Dextran-Komplexes durch Hinzufügen der Mischung zu einem mit Wasser mischbaren organischen Lösungsmittel; und
(e) Isolieren des kristallinen Eisen-Dextran-Komplexes.

2. Das Verfahren gemäß Anspruch 1, worin das mit Wasser mischbare Lösungsmittel Methanol ist.

3. Das Verfahren gemäß Anspruch 1, worin das Dextran gewählt ist aus der Gruppe bestehend aus Dextran, oxidiertem Dextran und hydriertem Dextran.

4. Das Verfahren gemäß Anspruch 3, worin das Dextran oxidiertes Dextran ist.

5. Das Verfahren gemäß Anspruch 4, worin das oxidierte Dextran hergestellt wird, indem Natriumhypochlorit und Alkali mit einer wässerigen Dextran-Lösung vereinigt werden.

6. Ein Verfahren zur Kristallisation eines Eisen-Dextran-Komplexes in leicht filtrierbarer Form, das das unter Rühren langsame Hinzufügen einer wässerigen Eisen-Dextran-Lösung zu einem Gefäß, das ein mit Wasser mischbares organisches Lösungsmittel enthält, umfaßt.

7. Das Verfahren gemäß Anspruch 6, worin die wässerige Eisen-Dextran-Lösung in einem Volumenverhältnis von nicht mehr als 1:1 zu dem mit Wasser mischbaren organischen Lösungsmittel hinzugefügt wird.

8. Das Verfahren gemäß Anspruch 7, worin das mit Wasser mischbare Lösungsmittel Methanol ist.

9. Das Verfahren gemäß Anspruch 8, worin die wässerige Eisen-Dextran-Lösung in einem Volumenverhältnis von 1:8 zu dem Methanol hinzugefügt wird.
